# FASCICULE DE BREVET EUROPEEN

(11) **EP 0 978 660 B1**
(45) Date de publication et mention de la délivrance du brevet: **02.04.2003**
(21) Numéro de dépôt: 99490024.9
(22) Date de dépôt: 02.08.1999
(51) Int. Cl.: F16B 2/06, F16B 43/02

(54) **Dispositif de serrage, constitué d'une bride et d'une tige d'assemblage, destiné à retenir deux pièces l'une contre l'autre**
Klemmvorrichtung, bestehend aus einer Spannvorrichtung und einer Fixierstange, zum gegenseitigen Verbinden von zwei Teilen
Fastening device, consisting of a clamping device and of a fastening rod, for joining two parts to one another

(30) Priorité: 07.08.1998 FR 9810348
(43) Date de publication de la demande: 09.02.2000
(73) Titulaire: Thiriet Fils Société Anonyme, 08000 Warcq (FR)
(72) Inventeur: Thiriet, Philippe, 08420 Warcq (FR)
(74) Mandataire: Duthoit, Michel

(56) Documents cités:
- EP-A- 0 431 209
- EP-A- 0 541 147
- DE-A- 2 041 607
- DE-U- 9 108 501
- FR-A- 2 677 714
- GB-A- 2 280 484

## Description

La présente invention concerne un dispositif de serrage, constitué d'une bride et d'une tige d'assemblage, destiné à retenir deux pièces l'une contre l'autre.

Actuellement, on connaît déjà de nombreux types de brides, par exemple, celle du document FR-A-2 677 714. Certaines prévoient une articulation de leurs tiges d'assemblage afin que celles-ci ne soient pas soumises à des contraintes de flexion mais travaillent uniquement en étirement.

Toutefois, ces dispositifs sont tous de structure relativement complexe, entraînant ainsi des difficultés de fabrication et de montage. En outre, leur poids et leur encombrement restent importants.

Le but de la présente invention est de proposer un dispositif de serrage, constitué d'une bride et d'une tige d'assemblage, qui pallie les inconvénients précités et offre une fabrication et un montage facilités.

Un autre but de la présente invention est de proposer un dispositif de serrage, constitué d'une bride et d'une tige d'assemblage, dont le poids et l'encombrement soient diminués.

Un autre but de la présente invention est de proposer un dispositif de serrage, constitué d'une bride et d'une tige d'assemblage, dont la robustesse soit améliorée.

Un avantage de l'invention est de permettre cumulativement ou alternativement d'assurer les fonctions suivantes :
- positionnement de la tige de manière à éviter les contraintes de flexion,
- blocage en rotation de la tige par rapport à la bride,
- blocage en rotation de la pièce à serrer,
- utilisation indifférenciée d'une même bride pour le blocage d'une ou deux pièces à serrer.

D'autres buts et avantages de l'invention apparaîtront au cours de la description qui va suivre.

La présente invention concerne un dispositif de serrage constitué d'une bride, présentant une face extérieure et une face intérieure, et d'une tige d'assemblage, traversant ladite bride et prévue apte à coopérer avec au moins une première pièce, dite pièce fixe, pour retenir au moins une seconde pièce, à serrer, entre la face intérieure de ladite bride et ladite pièce fixe, caractérisé par le fait que ladite tige est prévue monobloc et présente une tête, apte à coopérer avec un logement prévu sur la face extérieure de la bride.

L'invention sera mieux comprise à la lecture de la description suivante accompagnée des dessins en annexe qui en font partie intégrante et parmi lesquels
- la figure 1 est une vue de dessus d'un exemple de réalisation de la bride du dispositif de serrage conforme à l'invention,
- la figure 2 est une vue de dessus illustrant la bride représentée à la figure 1 précédente, accompagnée de la tige d'assemblage associée, en position d'utilisation,
- la figure 3 est une vue de coupe d'après la ligne III-III représentée à la figure 1 précédente,
- la figure 4 est une vue de coupe d'après la ligne IV-IV représentée à la figure 1 précédente,
- la figure 5 est une vue de coupe d'après la ligne V-V représentée à la figure 2 précédente.

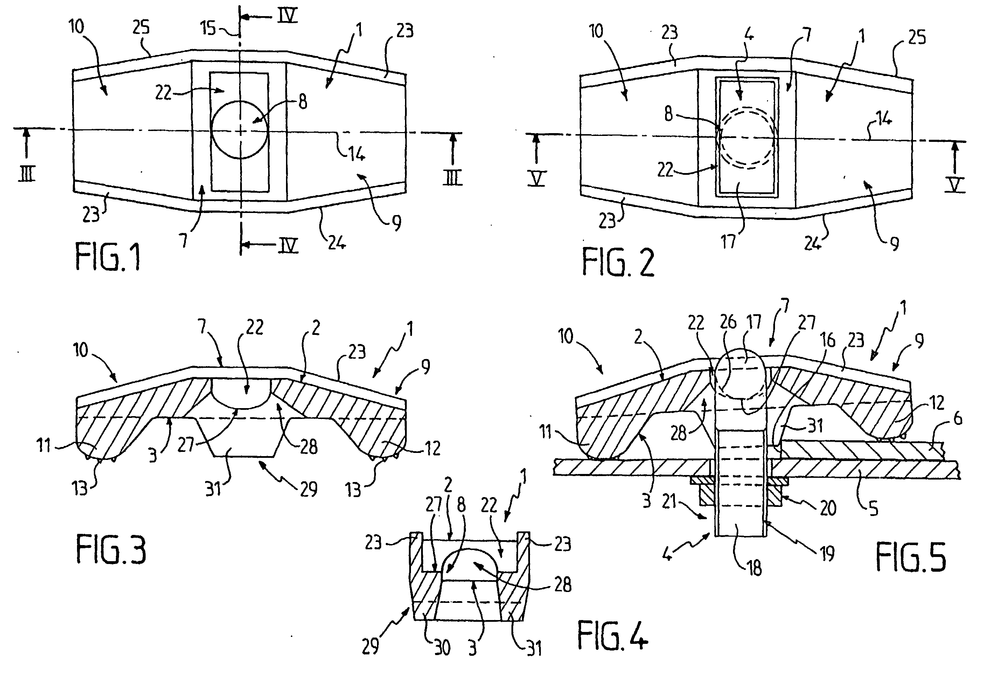

Comme illustré aux figures 1 à 5, le dispositif de serrage conforme à l'invention est constitué d'une bride 1, présentant une face extérieure 2 et une face intérieure 3. Il comprend également une tige d'assemblage 4 traversant ladite bride 1.

Ladite tige d'assemblage 4 est prévue apte à coopérer avec au moins une première pièce 5, dite pièce fixe, pour retenir au moins une seconde pièce 6, à serrer, entre la face intérieure 3 de ladite bride 1 et ladite pièce fixe 5.

Il est à noter que les termes « fixe » et « à serrer » ne présagent pas du rôle des pièces 5, 6 dans l'ensemble plus large dans lequel elles sont intégrées. Ils servent uniquement à les distinguer l'une de l'autre.

Ladite bride 1, présente, par exemple, une partie médiane 7 au niveau de laquelle un orifice 8 de passage de la tige 4 est prévu. Ladite partie médiane 7 est prolongée, notamment, de deux branches opposées 9, 10 se trouvant dans deux plans décalés angulairement par rapport au plan de ladite partie médiane 7.

Lesdites branches 9, 10 se terminent, par exemple, par un bourrelet 11, 12 destiné à être en contact avec la ou les pièces à serrer 6 et/ou la pièce fixe 5. Lesdits bourrelets 11, 12 sont munis, éventuellement, de stries 13 destinées à améliorer la fixation.

Ladite bride 1 présente, par exemple, un plan de symétrie longitudinal, illustré en vue de dessus par l'axe repéré 14. Elle pourra également présenter un plan de symétrie transversal, illustré en vue de dessus par l'axe repéré 15. Il est alors possible de l'utiliser dans des conditions avantageuses de manière indifférenciée pour coopérer avec une ou deux pièces à serrer 6 au niveau de l'une ou de ses deux branches 9, 10.

Les plans de symétrie longitudinale et transversale de la bride 1 sont respectivement, par exemple, sensiblement orthogonal et parallèle au plan de la tranche 16 de la ou des pièces 6 à serrer.

Ladite tige d'assemblage 4 présente une tête 17 et un corps 18. Pour permettre la fixation, ledit corps 18 est muni, notamment, de moyens d'accrochage 19 pour des moyens de blocage 20, notamment au voisinage de l'extrémité 21 opposée à celle de la tête 18.

Selon le mode de réalisation illustré, lesdits moyens d'accrochage 19 sont constitués d'un filetage et lesdits moyens de blocage 20 d'un écrou.

Selon l'invention, ladite tige d'assemblage 4 est prévue monobloc et sa tête 17 est prévue apte à coopérer avec un logement 22 ménagé sur la face extérieure 2 de la bride 1.

Par « tige 4 monobloc », on entend que ladite tête 17 et ledit corps 18 ne forment qu'une seule pièce, ladite tête 17 coopérant directement avec ledit logement 22, c'est-à-dire sans pièce intermédiaire.

Grâce à cette caractéristique, la fabrication et le montage sont facilités. En outre, grâce à l'encastrement de la tête 17 dans le logement 22, le poids et l'encombrement sont diminués.

En effet, ledit logement 22, prévu en creux dans la masse de la bride 1 permet au dispositif de serrage conforme à l'invention de ne pas présenter une tige d'assemblage 4 largement proéminente au-dessus de la surface extérieure 2 de la bride 1.

Ladite bride 1 présente, par exemple, des nervures de renforcement 23, réalisées dans la masse, au niveau de sa surface extérieure 2.

Unedite nervure 23 est prévue, notamment, de part et d'autre dudit logement 22, ce dernier étant orienté sensiblement orthogonalement à l'axe longitudinal 14 de ladite bride 1 tandis que lesdites nervures 23 sont orientées sensiblement orthogonalement à ce dernier.

Chaque dite nervure 23 est prévue, éventuellement, tout le long d'un des bords longitudinaux 24, 25 de la bride 1, ledit logement 22 étant prévu dans une zone médiane de ladite bride 1.

Les nervures 23 permettent, notamment, de renforcer la résistance mécanique du dispositif et d'éviter des éventuelles ruptures de la bride 1 lors du serrage. Ce risque est au contraire reporter au niveau du filetage de la tige 4, ce qui est économiquement plus acceptable, sans pour cela nécessiter une augmentation significative de son poids.

Ledit logement 22 et ladite tête 17 présentent éventuellement sur une partie 26, 27 au moins de leur profil une forme incurvée de manière à permettre un pivotement de ladite tête 17 dans ledit logement 22. Il s'agit, par exemple, d'une rotation de ladite tête 17 autour de son axe.

Grâce à ce pivotement, la tige 4 est articulée par rapport à la bride 1 et ladite tige 4 peut rester sensiblement orthogonale à la pièce fixe 5 quelle que soit l'épaisseur de la pièce à serrer 6. Elle n'est ainsi plus sujette à des contraintes de flexion mais travaille uniquement en étirement.

Ledit logement 22 présente, notamment, une forme sensiblement hémi-cylindrique et ladite tête 17 une forme correspondante, par exemple cylindrique, pour permettre le pivotement.

On empêche ainsi la rotation de la tige d'assemblage 4 par rapport à la bride 1 autour de l'axe longitudinal du corps 18, facilitant de la sorte le montage.

Il est possible, notamment, d'utiliser un logement 22 de forme sensiblement hémisphérique et une tête 17 de forme sphérique.

Selon un premier mode de réalisation, le logement 22 est prévu débouchant au niveau de la face intérieure 3 de la bride 1.

Selon un autre mode de réalisation, correspondant notamment à celui illustré, ladite bride 1 présente au niveau de sa face intérieure 3 un évidement 28 débouchant dans ledit logement 22 par l'orifice de passage 8 pour la tige d'assemblage 4. Ledit évidement 28 constitue, notamment, un espace de débattement pour ladite tige 4, permettant ainsi son maintien sensiblement orthogonal à la pièce fixe 5 sans contrainte de flexion.

Ledit évidement 28 présente, par exemple, une forme évasée, notamment sensiblement troncônique, le sommet du cône porteur du tronc de cône étant dirigé vers la face extérieure 2 de la bride 1. L'orifice de passage 8 est situé, par exemple, dans la partie centrale du logement 22.

Le dispositif conforme à l'invention comprend en outre, éventuellement, des moyens 29 pour éviter la rotation des première 5 et seconde 6 pièces l'une par rapport à l'autre.

Il s'agit, notamment, de deux ailes 30, 31, une dite aile 30, 31 étant prévue latéralement de part et d'autre de ladite bride 1 au niveau dudit logement 22 pour coopérer avec la pièce à serrer 6.

Lesdites ailes 30, 31 sont situées, par exemple, sur toute la longueur de la partie médiane 7. Elles s'étendent, notamment, à partir de ladite surface intérieure 3 pour coopérer avec la tranche 16 de la pièce à serrer 6. Elles sont orientées, par exemple, sensiblement parallèlement au plan longitudinal de ladite bride 1. Elles offrent, notamment, un profil trapézoïdal, la grande base du trapèze correspondant avec la face intérieure 3 de la bride 1.

Lesdites ailes 30, 31 sont, éventuellement, réalisées dans la masse.

## Revendications

1. Dispositif de serrage constitué d'une bride (1), présentant une face extérieure (2) et une face intérieure (3), et d'une tige d'assemblage (4), traversant ladite bride (1) et prévue apte à coopérer avec au moins une première pièce (5), dite pièce fixe, pour retenir au moins une seconde pièce (6), à serrer, entre la face intérieure (3) de ladite bride (1) et ladite pièce fixe (5), **caractérisé par le fait que** ladite tige (4) est prévue monobloc et présente une tête (17), apte à coopérer avec un logement (22) prévu sur la face extérieure (2) de la bride (1).

2. Dispositif selon la revendication 1, dans lequel ladite bride (1) présente des nervures de renforcement (23), réalisées dans la masse au niveau de sa surface extérieure (2).

3. Dispositif selon la revendication 2, dans lequel ladite bride (1) présente un axe longitudinal (14), ledit logement (22) étant prévu orienté sensiblement orthogonalement audit axe longitudinal (22) et une desdites nervures (23) étant prévue de part et d'autre dudit logement (22) et orientée sensiblement selon ledit axe longitudinal (14).

4. Dispositif selon la revendication 3, dans lequel chaque dite nervure (23) est prévue tout le long d'un des bords longitudinaux (24, 25) de la bride (1), ledit logement (22) étant prévu dans une zone médiane de ladite bride (1).

5. Dispositif selon la revendication 1, dans lequel ledit logement (22) et ladite tête (17) présentent sur une partie au moins de leur profil une forme incurvée de manière à permettre un pivotement de la dite tête (17) dans ledit logement (22).

6. Dispositif selon la revendication 5, dans lequel ledit logement (22) présente une forme sensiblement hémi-cylindrique et ladite tête (17) présente une forme correspondante pour permettre le pivotement.

7. Dispositif selon la revendication 6, dans lequel ladite tête (17) présente une forme sensiblement cylindrique.

8. Dispositif selon la revendication 1, dans lequel ladite bride (1) présente au niveau de sa face intérieure (3) un évidement (28) débouchant dans ledit logement (22) par un orifice de passage (8) pour ladite tige (4).

9. Dispositif selon la revendication 1, comprenant en outre des moyens (29) pour éviter la rotation des première (5) et seconde (6) pièces l'une par rapport à l'autre.

10. Dispositif selon la revendication 9, dans lequel lesdits moyens (29) pour éviter la rotation sont constitués de deux ailes (30, 31) une dite aile (30, 31) étant prévue latéralement de part et d'autre de ladite bride (1) au niveau dudit logement (22) pour coopérer avec ladite seconde pièce (6).

## Claims

1. A clamping device consisting of a flange (1), having an external face (2) and an internal face (3), and of an assembly rod (4), going through said flange (1) and capable of co-operating with at least one first part (5), so-called fixed part, to retain at least one second part (6), to be clamped, between the internal face (3) of said flange (1) and said fixed part (5), **characterised in that** said rod (4) is provided as a single piece and comprises a head (17), capable of co-operating with a housing (22) arranged on the external face (2) of the 'flange (1).

2. A device according to claim 1, wherein said flange (1) has back-up ribs (23), provided in its thickness at its external surface (2).

3. A device according to claim 2, wherein said flange (1) has a longitudinal axis (14), said housing (22) being oriented substantially perpendicular to said longitudinal axis (22) one of said ribs (23) being provided on either side of said housing (22) and oriented substantially along said longitudinal axis (14).

4. A device according to claim 3, wherein each said rib (23) is laid out all along one of the longitudinal edges (24, 25) of the flange (1), said housing (22) being provided in a middle zone of said flange (1).

5. A device according to claim 1, wherein said housing (22) and said head (17) have, on at least one portion of their profile, a curved shape in order to enable said head (17) to pivot inside said housing (22).

6. A device according to claim 5, wherein said housing (22) is substantially semi-cylindrical in shape and said head (17) has a matching shape to enable pivoting.

7. A device according to claim 6, wherein the shape of said (17) is substantially cylindrical.

8. A device according to claim 1, wherein said flange (1) has at its internal face (3) a recess (28) emerging in said housing (22) via a passageway (8) for said rod (4).

9. A device according to claim 1, comprising moreover means (29) to prevent the first (5) and second (6) parts from rotating with respect to one another.

10. A device according to claim 9, wherein said rotation-preventing means (29) consist of two wings (30, 31), one such wing (30, 31) being laid out laterally on either side of said flange (1) at said housing (22) to co-operate with said second part (6).

## Patentansprüche

1. Spannvorrichtung bestehend aus einem Bügel (1), welcher eine Außenseite (2) und eine Innenseite (3) aufweist, und einer Verbindungsstange (4), welche den besagten Bügel (1) durchquert und geeignet vorgesehen ist, mit wenigstens einem ersten Teil (5), welcher als fester Teil bezeichnet ist, zusammenzuwirken, um wenigstens einen zweiten, zu spannenden Teil (6) zwischen der Innenseite (3) des besagten Bügels (1) und dem besagten festen Teil (5) festzuhalten, **dadurch gekennzeichnet, daß** die besagte Stange (4) einstückig vorgesehen ist und einen Kopf (17) aufweist, der geeignet ist, mit einer Aussparung (22) zusammenzuwirken, die auf der Außenseite (2) des Bügels (1) vorgesehen ist.

2. Vorrichtung nach Anspruch 1, bei welcher der besagte Bügel (1) Verstärkungsrippen (23) aufweist, die in der Masse im Bereich ihrer Außenfläche (2) ausgeführt sind.

3. Vorrichtung nach Anspruch 2, bei welcher der besagte Bügel (1) eine Längsachse (14) aufweist, wobei die besagte Aussparung (22) im wesentlichen rechtwinklig zur Längsachse (22) gerichtet vorgesehen ist und eine der besagten Rippen (23) beiderseits der besagten Aussparung (22) vorgesehen und im wesentlichen nach der besagten Längsachse (14) gerichtet ist.

4. Vorrichtung nach Anspruch 3, bei der jede der besagten Rippen (23) entlang eines der Längsränder (24, 25) des Bügels (1) vorgesehen ist, wobei die besagte Aussparung (22) in einem Mittelbereich des besagten Bügels (1) vorgesehen ist.

5. Vorrichtung nach Anspruch 1, bei der die besagte Aussparung (22) und der besagte Kopf (17) auf wenigstens einem Teil ihres Profils eine gebogene Form aufweisen, um ein Schwenken des besagten Kopfes (17) in der besagten Aussparung (22) zu erlauben.

6. Vorrichtung nach Anspruch 5, bei der die besagte Aussparung (22) eine im wesentlichen halbzylindrische Form und der besagte Kopf (17) eine entsprechende Form aufweist, um das Schwenken zu erlauben.

7. Vorrichtung nach Anspruch 6, bei welcher der besagte Kopf (17) eine im wesentlichen zylindrische Form aufweist.

8. Vorrichtung nach Anspruch 1, bei welcher der besagte Bügel (1) im Bereich seiner Innenseite (3) eine Ausnehmung (28) aufweist, die durch eine Durchgangsöffnung (8) für die besagte Stange (4) in die besagte Aussparung (22) ausmündet.

9. Vorrichtung nach Anspruch 1, die außerdem Mittel (29) umfaßt, um die Drehung des ersten (5) und des zweiten Teiles (6) bezüglich einander zu vermeiden.

10. Vorrichtung nach Anspruch 9, bei der die besagten Mittel (29), um die Drehung zu vermeiden, aus zwei Flügeln (30, 31) bestehen, wobei der eine der besagten Flügel (30, 31) seitlich beiderseits des Bügels (1) im Bereich der besagten Aussparung (22) vorgesehen ist, um mit dem besagten zweiten Teil (6) zusammenzuwirken.
